# EUROPEAN PATENT APPLICATION

(11) **EP 4 692 752 A1**
(43) Date of publication of application: **11.02.2026**
(21) Application number: 25194008.6
(22) Date of filing: 05.08.2025
(51) Int. Cl.: G01M 99/00, H05K 7/20

(54) **LIQUID-COOLED LOAD BANK AND METHODS OF USING THE SAME**

(30) Priority: 07.08.2024 US 202463680437 P; 01.08.2025 US 202519288024
(71) Applicant: Avtron Power Solutions, LLC, Cleveland OH 44125 (US)
(72) Inventor: SHOUREAS, Steven, Cleveland, 44125 (US); ALLEN, Steven, Easton-on-the-Hill, PE9 3NP (GB); ARCOS, Waldo, Cleveland, 44125 (US); BRISSETTE, Christopher, Manchester, 03103 (US); KOZAR, David, Cleveland, 44125 (US); MUSGRAVE, Matthew, Easton-on-the-Hill, PE9 3NP (GB); PUSKAS, Jozsef A., Cleveland, 44125 (US)
(74) Representative: Eisenführ Speiser

(57) **Abstract**

A liquid-cooled load bank is provided. The liquid-cooled load bank can include a base; a heating reservoir coupled to the base, where the heating reservoir includes a reservoir inlet and a reservoir outlet; and at least one heating element adapted for heating liquid within the heating reservoir, where the reservoir inlet comprises an inlet opening in a bottom of the heating reservoir. A method is also provided where the liquid-cooled load bank is used to calibrate and test a cooling system.

## Description

### CROSS-REFERENCE TO RELATED APPLICATIONS

This application claims priority to United States Application No. 19/288,024 filed August 1, 2025, which claims priority to United States Provisional Application No. 63/680,437, filed August 7, 2024, the entire contents of which are incorporated herein by reference.

### TECHNICAL FIELD

The disclosure relates to a liquid-cooled load bank and methods of using the same.

### BACKGROUND

Liquid-cooled load banks (LCLBs) are used to test liquid cooling systems in a variety of systems, including data centers. The LCLB is used to verify the performance and reliability of electrical and cooling systems designed to cool sensitive equipment. As such LCLBs are generally used during the commissioning process for a system or during maintenance of a system prior to connecting the cooling system to sensitive and expensive equipment, such graphic processing units, that can be damaged if the system provides inadequate cooling or otherwise fails.

### SUMMARY

In one aspect, a liquid-cooled load bank (LCLB is provided. The LCLB includes a heating reservoir, where the heating reservoir comprises a reservoir inlet and a reservoir outlet; and at least one heating element adapted for heating liquid within the heating reservoir, where one or the reservoir inlet or the reservoir outlet comprises a first opening in a bottom of the heating reservoir.

In some embodiments, the LCLB includes a base, where the heating reservoir is coupled to the base and a bottom of the heating reservoir is above a bottom of the base.

In some embodiments, the LCLB includes a base and a plurality of wheels coupled to, and extending below, the base, and the heating reservoir coupled to the base.

In some embodiments, the heating reservoir includes a plurality of heating tanks, where each heating tank includes a tank inlet and a tank outlet, and, for each tank, one of the tank inlet or the tank outlet comprises a first tank opening in a bottom of the respective heating tanks.

In some embodiments, for each tank, the tank inlet comprises the first tank opening in a bottom of the respective heating tank.

In some embodiments with a plurality of heating tanks, the LCLB includes a load bank inlet at an end of a load bank feed line, wherein each of the tank inlets receives liquid from the load bank feed line.

In some embodiments with a plurality of heating tanks, the LCLB includes a load bank outlet at an end of a load bank outlet line, wherein each of the tank outlets feeds liquid to the load bank outlet line.

In some embodiments with a plurality of heating tanks, the LCLB includes at least one heating element adapted for heating liquid within each of the plurality of heating tanks.

In some embodiments, the LCLB includes a control system, wherein the at least one heating element is connected to the control system. In some embodiments, the LCLB includes at least one of a temperature sensor, a flow meter, or a pressure sensor, where, when present, each of the temperature sensor, the flow meter, and the pressure sensor is connected to the control system. In some embodiments, the control system detects whether sufficient cooling is being provided to the liquid-cooled load bank.

In some embodiments, the LCLB includes a vent line, where the vent line is in fluid communication with an upper portion of the heating reservoir and is adapted for purging air from the heating reservoir.

In another aspect, a method of testing a liquid cooling system using a liquid-cooled load bank as described herein is provided. The method includes connecting an outlet of the liquid cooling system to an inlet of the liquid-cooled load bank; connecting an inlet of the liquid cooling system to an outlet of the liquid-cooled load bank; setting the liquid-cooled load bank to a target heating load; operating the liquid-cooled load bank and the liquid cooling system; and determining whether the liquid cooling system provides enough cooling to dissipate the target heating load.

In some embodiments, the determining includes comparing a temperature of liquid in the liquid-cooled load bank with a target temperature.

In some embodiments, the liquid-cooled load bank includes a control system and a flow meter, and the control system is designed to derate a heating capacity of the liquid-cooled load bank upon detection of a derating trigger.

### BRIEF DESCRIPTION OF THE DRAWINGS

The following drawings are illustrative of particular embodiments of the present disclosure and therefore do not limit the scope of the present disclosure. The drawings are not to scale and are intended for use in conjunction with the explanations in the following detailed description.
FIG. 1 illustrates a side view of the heating subsystem of a liquid-cooled load bank in accordance with some embodiments;
FIG. 2 is a top view of the heating subsystem of FIG. 1;
FIG. 3 is a bottom view of a heating subsystem of FIG 1;
FIG. 4 is a perspective view of a heating element in accordance with some elements;
FIG. 5 illustrates a first perspective view of a liquid-cooled load bank that encloses, for example, the heating subsystem of FIGS. 1-3, in accordance with some embodiments;
FIG. 6 illustrates a second perspective view of the view liquid-cooled load bank of FIG. 5;
FIG. 7 illustrates a side view of the heating subsystem of a liquid-cooled load bank containing two heating tanks in accordance with some embodiments;
FIG. 8 is a top view of the heating subsystem of FIG. 7;
FIG. 9 is a partial cut-away view of the heating subsystem of FIG. 7 within an enclosure according to some embodiments;
FIG. 10 illustrates a first perspective view of a liquid-cooled load bank that encloses, for example, the heating subsystem of FIGS. 7-8, in accordance with some embodiments;
FIG. 11 illustrates a second perspective view of the view liquid-cooled load bank of FIG. 10;
FIG. 12 illustrates a first portion of an automatic air venting system;
FIG. 13 illustrates an exterior portion of an automatic air venting system;

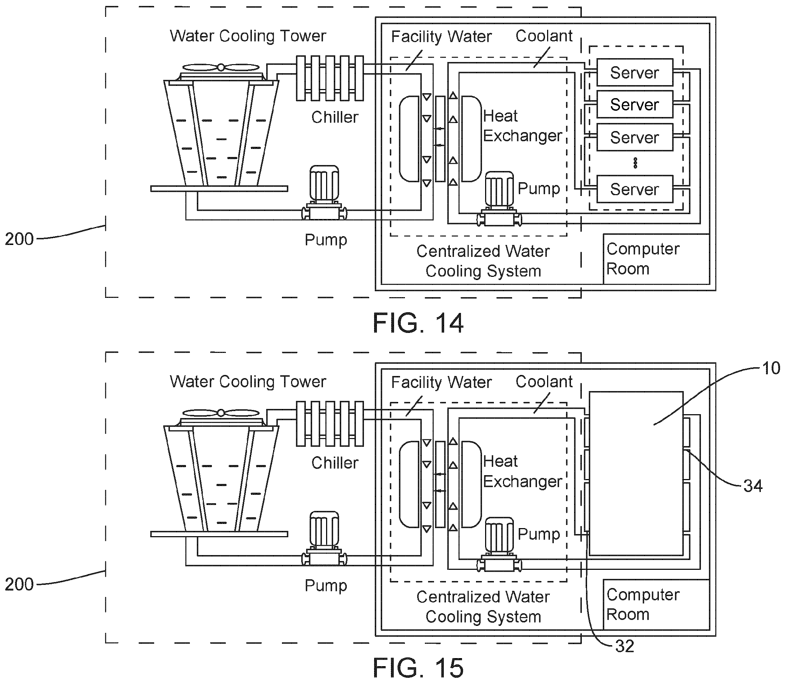

FIG. 14 illustrates an example of a server rack connected to a liquid cooling system;
FIG. 15 illustrates an example of a cooling system of FIG. 14 being tested and/or calibrated using a liquid-cooled load bank in according with some embodiments.

### DETAILED DESCRIPTION

The following discussion omits or only briefly describes conventional features of liquid-cooled load banks that are apparent to those skilled in the art. It is noted that various embodiments are described in detail with reference to the drawings, in which like reference numerals represent like parts and assemblies throughout the several views. Reference to various embodiments does not limit the scope of the claims attached hereto. Additionally, any examples set forth in this specification are intended to be non-limiting and merely set forth some of the many possible embodiments for the appended claims. Further, particular features described herein can be used in combination with other described features in each of the various possible combinations and permutations.

Unless otherwise specifically defined herein, all terms are to be given their broadest reasonable interpretation including meanings implied from the specification as well as meanings understood by those skilled in the art and/or as defined in dictionaries, treatises, etc. It must also be noted that, as used in the specification and the appended claims, the singular forms "a," "an" and "the" include plural referents unless otherwise specified, and that the terms "includes" and/or "including," when used in this specification, specify the presence of stated features, elements, and/or components, but do not preclude the presence or addition of one or more other features, steps, operations, elements, components, and/or groups thereof. In the description, relative terms such as "horizontal," "vertical," "up," "down," "top," and "bottom" as well as derivatives thereof (e.g., "horizontally," "downwardly," "upwardly," etc.) should be construed to refer to the orientation as then described or as shown in the drawing figure under discussion. These relative terms are for convenience of description and normally are not intended to require a particular orientation. Terms including "above" versus "below," "inwardly" versus "outwardly," "longitudinal" versus "lateral," and the like are to be interpreted relative to one another or relative to an axis of elongation, or an axis or center of rotation, as appropriate. Terms concerning attachments, coupling, and the like, such as "connected" and "interconnected," refer to a relationship wherein structures are secured or attached to one another either directly or indirectly through intervening structures, as well as both movable or rigid attachments or relationships, unless expressly described otherwise. The terms "operatively connected," "operably connected," and the like are such attachments, couplings, or connections that allow the pertinent structures to operate as intended by virtue of that relationship.

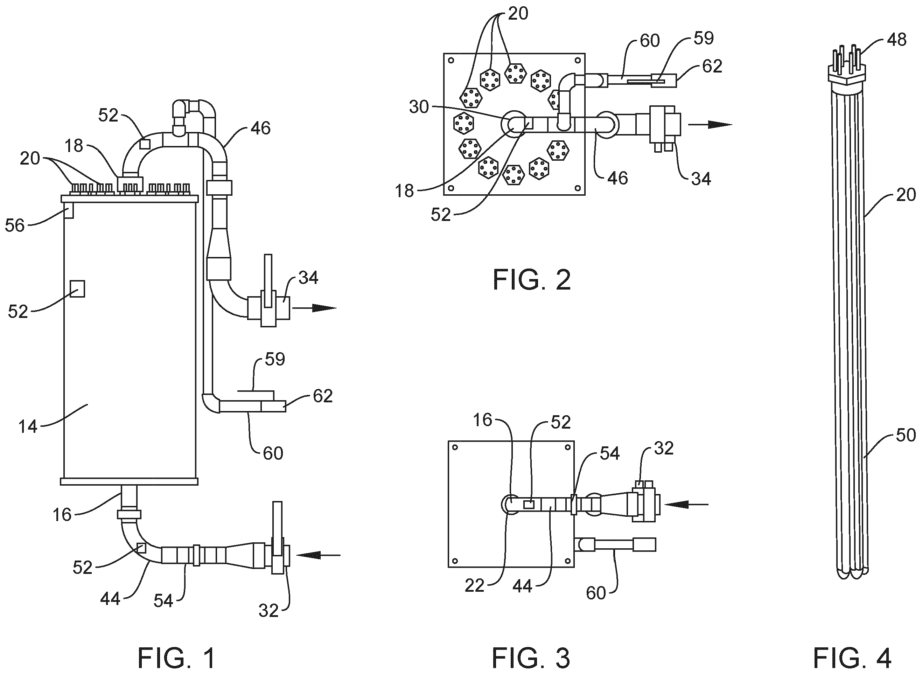

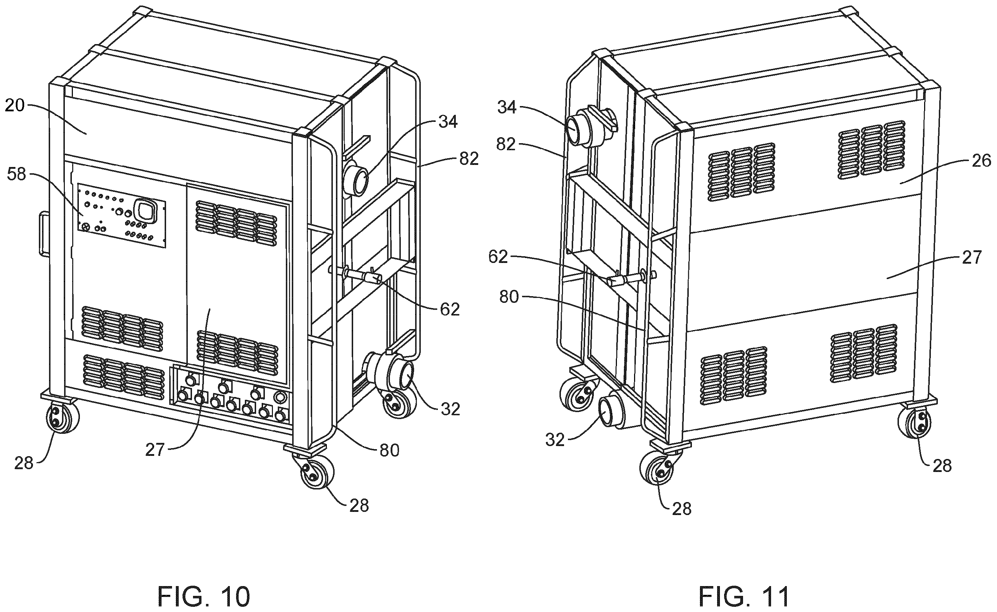

As shown in FIGS. 1-11, embodiments of the present disclosure relate generally to a liquid-cooled load bank 10, comprising a heating reservoir 14, where the heating reservoir 14 comprises a reservoir inlet 16 and a reservoir outlet 18; and at least one heating element 20 adapted for heating liquid within the heating reservoir 14, wherein the one of the reservoir inlet 16 or the reservoir outlet 18 comprises a first opening 22 in a bottom 24 of the heating reservoir 14.

In some embodiments, the liquid cooled load bank 10 can be located on a suitable mounting surface, including, but not limited to, a floor or concrete pad.

FIG. 4 shows an example of a heating element 20. In some embodiments, the heating element 20 includes electrical prongs or pins 48 and a heating component 50. The electrical prongs or pins 48 can be connected to an electrical source directly or via the control system 58. When electricity is applied, the heating component 20 can increase in temperature to heat the liquid within the heating reservoir 14 with which the heating component 20 is associated, whether that is a single reservoir 14 or a plurality of heating tanks 36. It should be understood that heating reservoir 14 refers both to a single heating tank or a plurality of heating tanks 36. In some embodiments, including those shown in FIGS. 1, 2, 7, and 8, the electrical prongs or pins 48 are located outside of the heating reservoir 14, while the heating component 20 extends into the single reservoir 14 or heating tank 36 it is associated with.

A unique aspect of the liquid-cooled load bank 10 described herein is that the positioning of the reservoir inlet 16 allows for complete draining of the heating reservoir 14 after use. This can prevent stagnant liquid from remaining in the liquid-cooled load bank 10 between uses. Stagnant liquid can be an issue both because it encourages the growth of microbes and can cause corrosion of the heating reservoir 14. Either of these issues can create problems for the cooling system the liquid-cooled load bank is being used to test and/or calibrate. This is especially true when the cooling system is used in connection with delicate electronics, such as GPUs, CPUs, etc.

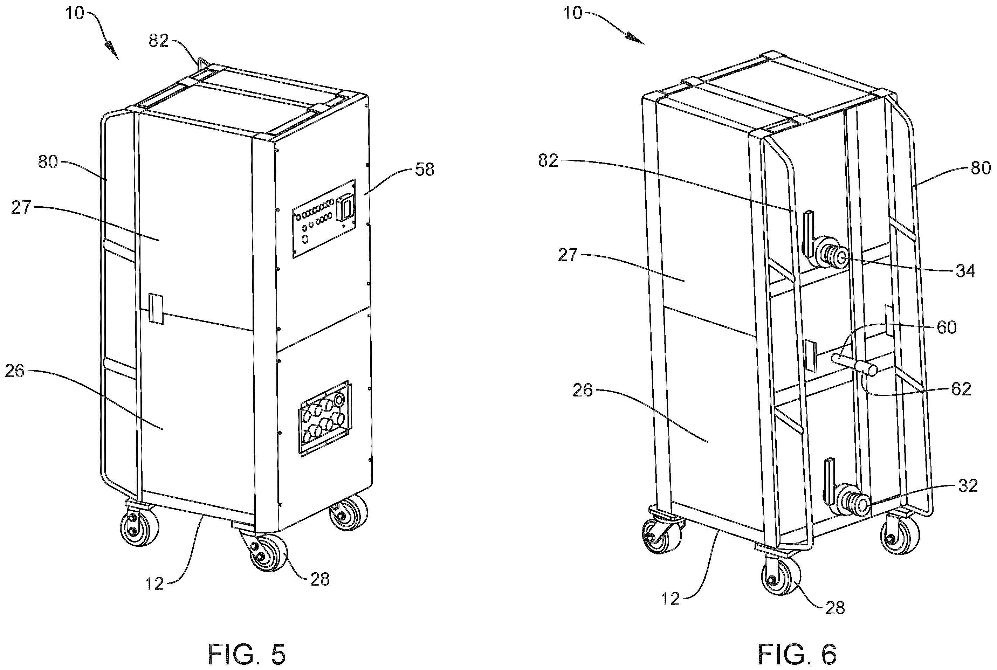

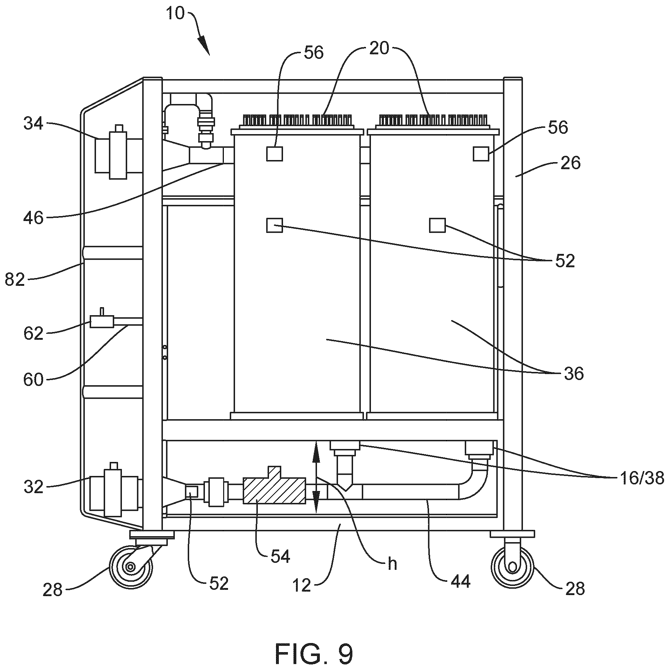

As shown in FIGS. 5, 6, and 9-11, in some embodiments, the liquid-cooled load bank comprises an enclosure 26, where the heating reservoir 14 is located within the enclosure 26. In some embodiments, as shown in FIG. 9, all elements of the load bank are located within the enclosure 26 except the load bank inlet 32, the load bank outlet 34, and the vent line outlet 62. The remaining components can be accessed through enclosure doors and access panels 27.

In some embodiments, the liquid-cooled load bank can include a base 12, where the heating reservoir 14 is coupled to the base 12.

In some embodiments, a bottom of the heating reservoir 14 is above the base 12 or mounting surface. In some embodiments, as shown in FIG. 9, the bottom of the heating reservoir 14 can be a given height (h) above the base 12 or mounting surface. In some embodiments, height (h) is at least 1", or at least 3", or at least 6", or at least 9", or at least 12" inches, or at least 14", or at least 16", or at least 18", or at least 20". This provides sufficient space for the reservoir inlets 16 to be located in the bottom of the heating reservoir(s) 14. This configuration allows the reservoir inlet to be located in a bottom of the heating reservoir 14, which enables the user to thoroughly clean out the heating reservoir 14 between uses to prevent growth of microbes, which could contaminate the cooling system to which the liquid-cooled load bank 10 is attached.

In some embodiments, the liquid-cooled load bank 10 is a portable liquid-cooled load bank. In some such embodiments, the base 12 is a pallet adapted to be lifted by a forklift, pallet jack, or other similar devices. In some embodiments, the liquid-cooled load bank 10 comprises a plurality of wheels 28 coupled to, and extending below, the base 12. In some embodiments, the wheels are castors. In such embodiments, the liquid-cooled load bank 10 can be rolled into position for testing and/or calibrating a cooling system 200 and removed once the testing and/or calibration is complete.

In some embodiments, the heating reservoir 14 comprises a second opening 30 in or proximate a top of the heating reservoir 14. One of the reservoir inlet 16 or the reservoir outlet 18 comprises the first opening 22, while the other one comprises the second opening 30. In such embodiments, the first opening can be referred to the inlet opening 22 and the second opening can be referred to as the outlet opening 30. While the discussion relates generally to embodiments where the reservoir inlet 16 comprises the first opening 22 and the reservoir outlet 18 comprises the second opening 30, it should be understood that this can be reversed by reversing how the liquid-cooled load bank 10 is connected to the cooling system.

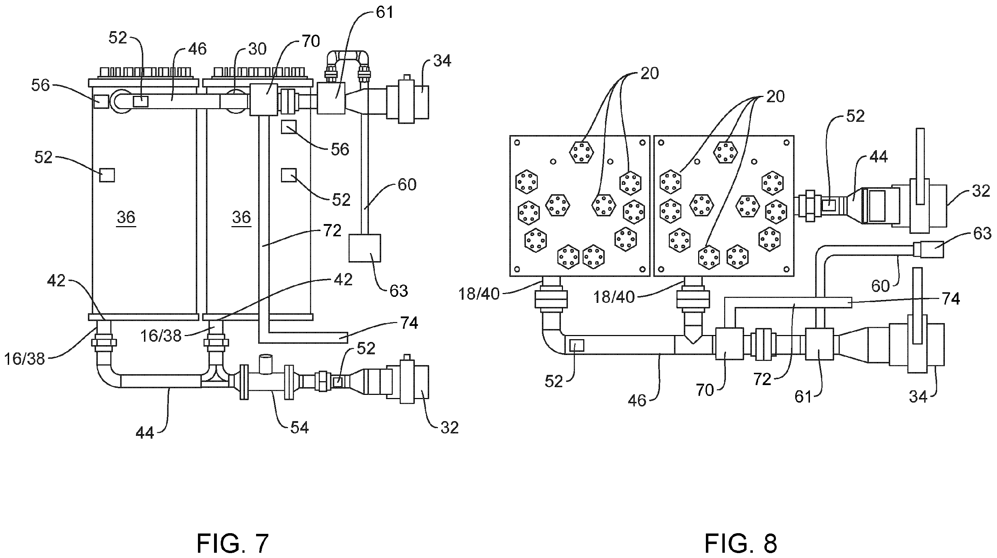

In some embodiments, the reservoir outlet 18 comprises an outlet opening 30 in or proximate to a top of the heating reservoir 14. For example, in FIGS. 1 and 2, the outlet opening 30 is in the top of the heating reservoir 14, while the outlet opening 30 is in a side of the heating reservoir 14 proximate the top in FIGS. 7-8. In some embodiments, the outlet opening 30 can be located in the upper 20% of the heating reservoir 14, or the upper 15%, or the upper 10%.

In some embodiments, the liquid-cooled load bank 10 includes a load bank inlet 32 in fluid communication with the reservoir inlet 16. In some embodiments, the liquid-cooled load bank 10 includes a load bank outlet 34 in fluid communication with the reservoir outlet 18. As shown in FIGS. 5, 6, and 9-11, in some embodiments, the load bank inlet 32 and load bank outlet 34 are accessible from outside the enclosure 26. In some such embodiments, the load bank inlet 32 and load bank outlet 34 extend outside the enclosure 26.

In some embodiments, as shown in FIGS. 5, 6, and 9-11, the enclosure 26 can include multifunctional assemblies 80, 82. Each of the multifunctional assemblies 80, 82 can include a variety of bars, including a vertically extending bar, that extend horizontally beyond the end of the enclosure 26. This arrangement prevents the liquid-cooled load bank 10 from running into an external object (*e.g.,* a wall, rail, etc.) and damaging the load bank inlet 32, load bank outlet 34, etc. and couplings that connect hoses to them. In other words, the multifunctional assemblies 80, 82 are designed to hit the external object before the external object hits the load bank inlet 32, load bank outlet 34, etc. or hoses connected to them. In addition, the multifunctional assemblies 80, 82 provide surfaces for the user to grip when moving the liquid-cooled load bank 10.

In some embodiments, the heating reservoir 14 comprises a plurality of heating tanks 36, where each heating tank 36 comprises a tank inlet 38 and a tank outlet 40, and, for each tank, one of the tank inlet 38 and the tank outlet 40 comprises a first tank opening 42 in a bottom of the respective heating tanks 36. In some embodiments, the first tank opening 42 can be part of the tank inlet 38, while the first tank opening 42 can be part of the tank outlet 40 in other embodiments.

In some embodiments, as shown in FIGS. 7-9, the heating reservoir 14 can be two or more heating tanks 36. While only two heating tanks 36 are shown in FIGS. 7-9, it will be understood that additional heating tanks 36 (*e.g.,* at least three heating tanks, at least four heating tanks, or at least five heating tanks) can be used in a similar manner. In some embodiments, as shown in FIGS. 7, 8, and 9, each of the heating tanks are connected in parallel.

In some embodiments, the load bank inlet 32 is at an end of a load bank feed line 44, where each of the tank inlets 38 receives liquid from the load bank feed line 44.

In some embodiments, the load bank outlet 34 at an end of a load bank outlet line 46, where each of the tank outlets 40 feeds liquid to the load bank outlet line 46.

In some embodiments, the liquid-cooled load bank 10 includes at least one heating element 20 adapted for heating liquid within each of the plurality of heating tanks 36. In some embodiments, the liquid-cooled load bank 10 includes at least two, at least five, at least eight, at least ten, at least twelve, at or at least fourteen heating element 20 adapted for heating liquid within each of the plurality of heating tanks 36. In some embodiments, the liquid-cooled load bank 10 can include any number of heating elements 20 appropriate to provide the desired heating load and/or control over the amount of heat produced (e.g., by activating or deactivating heating elements). In some embodiments, the liquid-cooled load bank 10 can include up to one hundred heating elements 20, or up to ninety, or up to eighty, or up to seventy, or up to sixty, or up to fifty heating elements 20.

In some embodiments, an interior of the heating reservoir 14 is made of a corrosion resistant material. For example, in some embodiments, the heating reservoir 14 can have an internal surface selected from a corrosion resistant material such as, but not limited to, stainless steel, a polymer coating, fiberglass, a fiberglass reinforced plastic, a ceramic coating, or a combination thereof. In some embodiments, the heating reservoir 14 can be formed of a corrosion resistant material such as, but not limited to, stainless steel, a polymer coating, fiberglass, a fiberglass reinforced plastic, a ceramic coating, or a combination thereof.

In some embodiments, the liquid-cooled load bank 10 includes a pressure relief system. The pressure relief system is adapted to protect the load bank from damage by opening during an overpressure event whether generated by the failure within the load bank, overpressure of liquid provided to the load bank, or operator error.

For instance, the heating reservoir 14, heating tanks 36, or load bank outlet line 46 can include a pressure relief valve 70 adapted to open when a target pressure is reached or exceeded. In some embodiments, the target pressure can be 105 psi, or 100 psi, or 95 psi, or 90 psi, or 85 psi, or 80 psi, or 75 psi, or 70 psi. The pressure relief valve 70 can be connected to a pressure relief line 72, which can include a pressure relief outlet 74. The pressure relief outlet 74 can include any appropriate fitting (e.g., a barbed fitting) and can be used to connect tubing routed to the load bank rear panel or another appropriate point to dispose of the excess liquid. An example of a pressure relief system where the pressure relief valve 70 is coupled to the load bank outlet line 46 is shown in FIGS. 7 and 8.

In some embodiments, the liquid-cooled load bank includes a control system 58, wherein the at least one heating element 20 is connected to the control system 58. In some embodiments, the at least one heating element 20 can be connected to the control system 58 via a digital control system, a toggle switch (manually), or a combination of both.

In some embodiments, the liquid-cooled load bank 10 also includes at least one of a temperature sensor 52, a flow meter 54, or a pressure sensor 56. When present, each of the temperature sensor 52, the flow meter 54, and the pressure sensor 56 is connected to the control system 58. In some embodiments, the pressure sensor 56 is positioned towards or at the top of the associated heating reservoir 14 or heating tank 36. In some embodiments, the temperature sensors 52 can be positioned towards or at the top of the associated heating reservoir 14 or heating tank 36. In some embodiments, temperature sensors 52 can be located at other positions, such as, upstream or downstream of the heating reservoir 14 or heating tank 36.

As used herein, when a component (20, 52, 54, 56) is connected to the control system, it can be communicatively connected and controlled to the control system 58. The connection can be a wired connection or a wireless connection (*e.g*., Wi-Fi, Bluetooth, etc.). In some embodiments, the component is also connected to an electrical supply (*e.g.*, by a cord or a battery) either directly or through the control system. In some embodiments, each component (20, 52, 54, 56) can independently be connected to the control system 58 via a digital control system, a toggle switch (manually), or a combination of both.

In some embodiments, the control system 58 detects whether sufficient cooling is being provided to the liquid-cooled load bank 10. As discussed above, the liquid-cooled load bank 10 can be connected to a cooling system 200 to determine whether the cooling system 200 is providing a target amount of cooling. If the target amount of cooling is provided, the temperature of the liquid at a specified location in the liquid-cooled load bank is at or below a target temperature. In some embodiments, the temperature of the liquid can be measured by a temperature sensor 52 inside the heating reservoir 14 and/or each heating tank 36 (*e.g.,* in a top, middle or bottom thereof). In some embodiments, the temperature can be measured by a temperature sensor 52 upstream (inlet side) or downstream (outlet side) of the heating reservoir 14 and/or each heating tank 36.

In some embodiments, the control system 58 is designed to derate a heating capacity of the liquid-cooled load bank 10 upon detection of a derating trigger. In some embodiments, the derating trigger can be a flow rate of fluid to the liquid-cooled load bank 10. In some embodiments, if the control system 58 detects a flow rate below a threshold value, the control system 58 can disable one or more of the heating elements 20 associated with the heating reservoir 14 (or specific heating tanks 36 thereof). In some embodiments, the threshold value can be 10% less than the designed value. In some embodiments, the threshold value can be 20% less than, or 30% less than, or 40% less than a designed value.

In some embodiments, the control system 58 can include more than one threshold value for flow rate. For instance, a first threshold value can be 15% less than the design value and a second threshold value can be 30% less than a design value. In such embodiments, a first number of heating elements 20 can be disabled if the flow rate falls below the first threshold value and a second number of heating element 20 can be disabled is the flow rate falls below the second threshold value. For instance, if there are eleven total heating elements per tank, three heating elements can be disabled if the flow rate is between the first and second threshold value, while five heating elements can be disabled if the flow rate falls below the second threshold value.

In some embodiments, the first threshold value can be 10% less, or 15% less, or 20% less, or 25% less, or 30% less, or 35% less than the design value. In some embodiments, the second threshold value can be 20% less, or 25% less, or 30% less, or 35% less, or 40% less, or 50% less than the design value.

In some embodiments, if the flow rate goes below a stop value, the control system 58 can disable all heating elements 20 in order to prevent damage to the liquid-cooled load bank 10 and/or any devices attached thereto (*e.g.,* the cooling system). For instance, if the flow rate falls below 50% of the design value, or below 40%, or below 30% of below 25% of the design value.

In some embodiments, the second number of heating elements (*i.e.,* number of elements turned off) is greater than the first number of heating elements. In some embodiments, the second threshold value is less than the first threshold value. For example, in the description above, the first threshold value is 85% of the design value, while the second threshold value is 70% of the design value.

For example, if the liquid-cooled load bank is designed for a flow rate of 50 gallons per minute and the flow rate entering the load bank inlet is only 30 gallons per minute, the control system may disable one or more heating elements 20 associated with the heating reservoir 14 (or specific heating tanks 36 thereof). Using such an approach with an embodiment such as the one in FIGS. 1-3, the heating reservoir 14 can include eleven heating elements, and the control system 58 can disable five of the heating elements 20 in order to reduce the capacity from 250 kW to 150 kW in order to prevent damage to the liquid-cooled load bank and/or the cooling system.

In some embodiments, the liquid cooled load bank 10 can provide an adjustable output depending on the requirements of the cooling system being evaluated. For instance, in some embodiments, the heating capacity of the liquid cooled load bank 10 can be adjusted within a range from 5 kW to 1,000 kW, or 10 kW to 750 kW. This can be achieved by using all of the heating elements 20 or fewer than all heating elements 20. Thus, in a manner similar to the derating techniques discussed above, the control system 58 can be programmed to operate at a desired heating capacity and then determine the appropriate number of heating elements 20 to use for the programmed heating capacity.

In some embodiments, the liquid-cooled load bank (LCLB) 10 includes a vent line 60. In some embodiments, the vent line 60 is in fluid communication with an upper portion of the heating reservoir 14/36 and is adapted for purging air from the heating reservoir 14/36. In some embodiments, the vent line 60 is split off of the load bank outlet line 46. In some embodiments, the vent line 60 can be connected directly to the heating reservoir 14/36.

In some embodiments, as shown in FIGS. 1 and 2, venting can be performed manually using a venting control valve 59. For example, when the heating reservoir 14/36 is being filled, the venting control valve 59 can be opened to allow air to exit the vent line outlet 62. Once liquid starts exiting the vent line outlet 62, the venting control valve 59 can be closed.

In some embodiments, as shown in FIGS. 7, 8, 12, and 13, the LCLB 10 includes an automatic purge valve 61. In such embodiments, air is automatically purged from the system at the high point of the system and at low pressure while the heating reservoir 14/36 is being filled. When the system has been purged of air, the venting process is automatically stopped (e.g., via a float switch in the automatic purge valve 61). A minimum of liquid may pass through the automatic purge valve 61 into a collection vessel 63, which can be mounted on the enclosure 26. The collection vessel 63 may be emptied as appropriate.

In some embodiments, the fluid flowing through the liquid-cooled load bank 10 is a coolant. In some instances, the coolant can be selected from water, polyethylene glycol, polypropylene glycol, or another liquid.

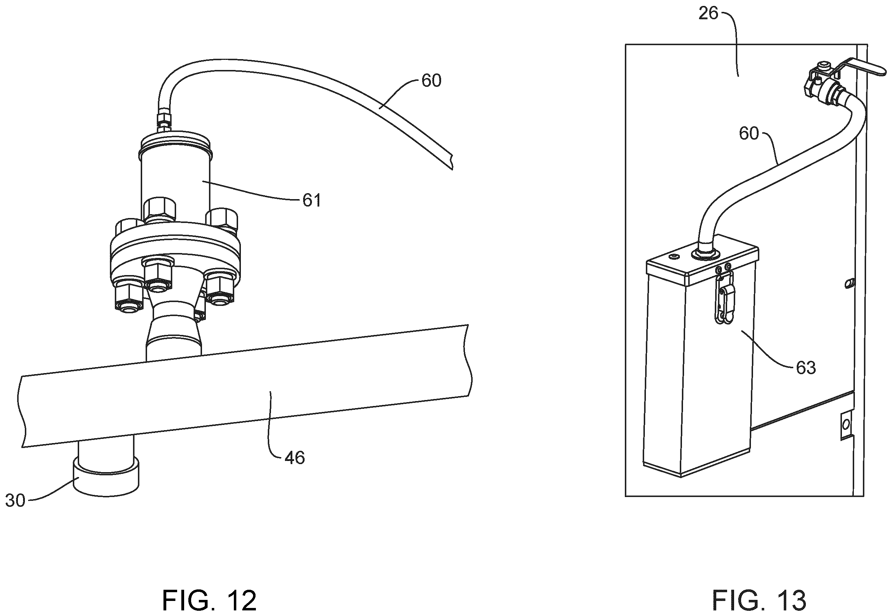

In another aspect, a method of testing a liquid cooling system 200. In some embodiments, as shown in FIG. 13, the method includes:
providing a liquid-cooled load bank as described herein;
connecting an outlet of the liquid cooling system to an inlet of the liquid-cooled load bank;
connecting an inlet of the liquid cooling system to an outlet of the liquid-cooled load bank;
setting the liquid-cooled load bank to a target heating load;
operating the liquid-cooled load bank and the liquid cooling system; and
determining whether the liquid cooling system provides enough cooling to dissipate the target heating load.

In some embodiments, the determining comprises comparing a temperature of liquid in the liquid-cooled load bank with a target temperature. In some embodiments, the temperature is measured using a temperature sensor inside the heating reservoir 14/heating tanks 36. For instance, at a top portion of the heating reservoir 14/heating tanks 36. In some embodiments, the temperature is measured using a temperature sensor upstream of the heating reservoir 14/heating tanks 36 (*e.g.,* in the load bank feed line 44).

In some embodiments, the determining comprises measuring a temperature difference between liquid exiting the liquid-cooled load bank and liquid received from the cooling system, and comparing the temperature different with a target temperature difference.

It should be understood that the temperature received from the cooling system refers generally to a location prior to or upstream of the liquid-cooled load bank 10. This can be a location from the load bank inlet 32 to the reservoir/tank inlet 16, 38. In some embodiments, the location can be within the load bank feed line 44.

Similarly, it should be understood that the temperature of liquid exiting the liquid-cooled load bank or downstream of the heating reservoir refers generally to a location after exiting the heating reservoir, but prior to being subjected to cooling by a cooling system 200. In some embodiments, this will be a temperature prior to exiting the liquid-cooled load bank 10. This can be a location from the reservoir/tank outlet 18, 40 to the load bank outlet 34. In some embodiments, the location can be within the load bank outlet line 46.

This method can be used for testing liquid cooling systems. For instance, the method can be used for calibrating and testing a cooling system used for cooling electrical racks in a data center. As will be understood, it is critical that the cooling system 200 is providing adequate cooling prior to relying on the cooling system to cool delicate and expensive electrical components (e.g., GPUs, CPUs, etc.). FIG. 12 shows an example of the cooling system 200 connected to a plurality of server racks, while FIG. 13 shows an example of the cooling system 200 connected to a liquid-cooled load bank 10 as described herein. Thus, the liquid-cooled load bank 10 can be set to simulate the heat load produced by the plurality of server racks.

Once connected, the control system 58 can detect the temperature and flow rate at appropriate locations within in the liquid-cooled load bank 10 in order to determine whether the cooling system 200 is working properly. For example, the cooling system 200 can be designed to return liquid to the server rack/liquid-cooled load bank at a given temperature. The control system 58 can detect the temperature of the stream entering the load bank feed line to determine if appropriate cooling has been provided. Thus, for example, if the feed temperature is higher than a target temperature, the cooling system is not providing adequate cooling. Alternately, if the feed temperature is at or below a target temperature, the cooling system is providing adequate cooling. Once the cooling system 200 has been calibrated and/or approved, the liquid-cooled load bank 10 can be removed and the server racks can be installed.

In some embodiments, the liquid-cooled load bank includes a control system and a flow meter, wherein the control system is designed to derate a heating capacity of the liquid-cooled load bank upon detection of a derating trigger. In some embodiments, the method described herein includes any of the components of the liquid-cooled load bank described herein and any process or method described herein.

In some embodiments, a bottom of the heating reservoir 24 is at least 6" inches (h) above the base 12. As an example, height (h) is shown in FIG. 9. In some embodiments, height (h) is at least 12" inches, or at least 14", or at least 16", or at least 18", or at least 20" above the base 12.

In some embodiments, the heating reservoir comprises a plurality of heating tanks, where each heating tank comprises a tank inlet and a tank outlet, and each tank inlet comprises an inlet opening in a bottom of the respective heating tank.

In some embodiments, an interior of the heating reservoir is made of a corrosion resistant material.

In some embodiments, the liquid-cooled load bank further comprises a plurality of wheels coupled to, and extending below, the base.

The various embodiments described above are provided by way of illustration only and should not be construed to limit the claims attached hereto. Those skilled in the art will readily recognize various modifications and changes that may be made without following the example embodiments and applications illustrated and described herein, and without departing from the spirit and scope of the following claims.

### Specific Embodiments

In a first embodiments, a liquid-cooled load bank is provided that includes a heating reservoir, where the heating reservoir comprises a reservoir inlet and a reservoir outlet; and at least one heating element adapted for heating liquid within the heating reservoir, where one of the reservoir inlet or the reservoir outlet comprises a first opening in a bottom of the heating reservoir.

A second embodiment can be a liquid-cooled load bank of the first embodiment further comprising an enclosure, where the heating reservoir is located within the enclosure.

A third embodiment can be a liquid-cooled load bank of the first or second embodiments, further comprising a base, where the heating reservoir coupled to the base and a bottom of the heating reservoir is above a bottom of the base.

A fourth embodiment can be a liquid-cooled load bank of any of the first to third embodiments, further comprising a base and a plurality of wheels coupled to, and extending below, the base, where the heating reservoir coupled to the base.

A fifth embodiment can be a liquid-cooled load bank of any of the first to fourth embodiments, where the other one of the reservoir outlet and the reservoir inlet comprises an second opening in or proximate to a top of the heating reservoir.

A sixth embodiment can be a liquid-cooled load bank of any of the first to fifth embodiments, where the reservoir inlet comprises the first opening and the reservoir outlet comprises the second opening.

A seventh embodiment can be a liquid-cooled load bank of any of the first to sixth embodiments, further comprising a load bank inlet in fluid communication with the reservoir inlet; and a load bank outlet in fluid communication with the reservoir inlet.

A eighth embodiment can be a liquid-cooled load bank of any of the first to seventh embodiments, where the heating reservoir comprises a plurality of heating tanks, where each heating tank comprises a tank inlet and a tank outlet, and where each tank inlet comprises a first tank opening in a bottom of the respective heating tanks.

A ninth embodiment can be a liquid-cooled load bank of the eighth embodiment, further comprising a load bank inlet at an end of a load bank feed line, where each of the tank inlets receives liquid from the load bank feed line.

A tenth embodiment can be a liquid-cooled load bank of the eighth or ninth embodiment, further comprising a load bank outlet at an end of a load bank outlet line, where each of the tank outlets feeds liquid to the load bank outlet line.

An eleventh embodiment can be a liquid-cooled load bank of any one of the eighth to tenth embodiments, further comprising at least one heating element adapted for heating liquid within each of the plurality of heating tanks.

A twelfth embodiment can be a liquid-cooled load bank of any one of the first to eleventh embodiments, further comprising a control system, where the at least one heating element is connected to the control system.

A thirteenth embodiment can be a liquid-cooled load bank of the twelfth embodiment, further comprising at least one of a temperature sensor, a flow meter, or a pressure sensor; where, when present, each of the temperature sensor, the flow meter, and the pressure sensor is connected to the control system.

A fourteenth embodiment can be a liquid-cooled load bank of the twelfth or thirteenth embodiment, where the control system detects whether sufficient cooling is being provided to the liquid-cooled load bank.

A fifteenth embodiment is drawn to a method of testing a liquid cooling system, that includes:
providing a liquid-cooled load bank of the first embodiment;
connecting an outlet of the liquid cooling system to an inlet of the liquid-cooled load bank;
connecting an inlet of the liquid cooling system to an outlet of the liquid-cooled load bank;
setting the liquid-cooled load bank to a target heating load;
operating the liquid-cooled load bank and the liquid cooling system; and
determining whether the liquid cooling system provides enough cooling to dissipate the target heating load.

A sixteenth embodiment can be the method of the fifteenth embodiment, where a bottom of the heating reservoir is at least 6" inches above a bottom of the base.

A seventeenth embodiment can be the method of the fifteenth or sixteenth embodiments, where the heating reservoir comprises a plurality of heating tanks, where each heating tank comprises a tank inlet and a tank outlet, and where, for each tank, one of the tank inlet or the tank outlet comprises a first tank opening in a bottom of the respective heating tank.

An eighteenth embodiment can be the method of any one of the fifteenth to seventeenth embodiments, where for each tank, the tank inlet comprises a first tank opening in a bottom of the respective heating tank.

A nineteenth embodiment can be the method of any one of the fifteenth to eighteenth embodiments, where the determining comprises comparing a temperature of liquid in the liquid-cooled load bank with a target temperature.

A twentieth embodiment can be the method of any one of the fifteenth to nineteenth embodiments, where the liquid-cooled load bank includes a control system and a flow meter, and where the control system is designed to derate a heating capacity of the liquid-cooled load bank upon detection of a derating trigger.

## Claims

1. A liquid-cooled load bank, comprising:
a heating reservoir, wherein the heating reservoir comprises a reservoir inlet and a reservoir outlet; and
at least one heating element adapted for heating liquid within the heating reservoir, wherein one of the reservoir inlet or the reservoir outlet comprises a first opening in a bottom of the heating reservoir.

2. The liquid-cooled load bank of claim 1, further comprising a base, wherein the heating reservoir coupled to the base and a bottom of the heating reservoir is above a bottom of the base.

3. The liquid-cooled load bank of claim 1, wherein the other one of the reservoir outlet and the reservoir inlet comprises an second opening in or proximate to a top of the heating reservoir.

4. The liquid-cooled load bank of claim 1, wherein the reservoir inlet comprises the first opening and the reservoir outlet comprises the second opening.

5. The liquid-cooled load bank of claim 1, wherein the heating reservoir comprises a plurality of heating tanks, wherein each heating tank comprises a tank inlet and a tank outlet, and wherein each tank inlet comprises a first tank opening in a bottom of the respective heating tanks.

6. The liquid-cooled load bank of claim 5, further comprising a load bank inlet at an end of a load bank feed line, wherein each of the tank inlets receives liquid from the load bank feed line.

7. The liquid-cooled load bank of claim 5, further comprising a load bank outlet at an end of a load bank outlet line, wherein each of the tank outlets feeds liquid to the load bank outlet line.

8. The liquid-cooled load bank of claim 5, further comprising at least one heating element adapted for heating liquid within each of the plurality of heating tanks.

9. The portable liquid-cooled load bank of claim 1, further comprising a control system, wherein the at least one heating element is connected to the control system.

10. The liquid-cooled load bank of claim 9, further comprising at least one of a temperature sensor, a flow meter, or a pressure sensor,
wherein, when present, each of the temperature sensor, the flow meter, and the pressure sensor is connected to the control system.

11. The liquid-cooled load bank of claim 10, wherein the control system detects whether sufficient cooling is being provided to the liquid-cooled load bank.

12. A method of testing a liquid cooling system, comprising:
providing a liquid-cooled load bank of claim 1;
connecting an outlet of the liquid cooling system to an inlet of the liquid-cooled load bank;
connecting an inlet of the liquid cooling system to an outlet of the liquid-cooled load bank;
setting the liquid-cooled load bank to a target heating load;
operating the liquid-cooled load bank and the liquid cooling system; and
determining whether the liquid cooling system provides enough cooling to dissipate the target heating load.

13. The method of claim 12, wherein a bottom of the heating reservoir is at least 6" inches above a bottom of the base.

14. The method of claim 12, wherein the determining comprises comparing a temperature of liquid in the liquid-cooled load bank with a target temperature.

15. The method of claim 12, wherein the liquid-cooled load bank includes a control system and a flow meter, wherein the control system is designed to derate a heating capacity of the liquid-cooled load bank upon detection of a derating trigger.
